# EUROPEAN PATENT SPECIFICATION

(11) **EP 2 678 175 B1**
(45) Date of publication and mention of the grant of the patent: **25.11.2015**
(21) Application number: 12710314.1
(22) Date of filing: 21.02.2012
(51) Int. Cl.: B60H 1/00, B60H 1/32

(54) **VEHICLE COOLING SYSTEM**
FAHRZEUGKÜHLSYSTEM
SYSTÈME DE REFROIDISSEMENT DE VÉHICULE

(30) Priority: 22.02.2011 JP 2011035754
(43) Date of publication of application: 01.01.2014
(73) Proprietor: TOYOTA JIDOSHA KABUSHIKI KAISHA, Toyota-shi, Aichi-ken 471-8571 (JP)
(72) Inventor: KAWASE, Yasuhiro, Nishio Aichi 445-0012 (JP); OHNO, Yuichi, Nishio Aichi 445-0012 (JP); UCHIDA, Kazuhide, Nishio Aichi 445-0012 (JP); KAWAKAMI, Yoshiaki, Toyota-shi Aichi-ken 471-8571 (JP); JOJIMA, Yuki, Toyota-shi Aichi-ken 471-8571 (JP); TAKAHASHI, Eizo, Toyota-shi Aichi-ken 471-8571 (JP); SATO, Kousuke, Toyota-shi Aichi-ken 471-8571 (JP)
(74) Representative: TBK
(86) International application number: PCT/IB2012/000301
(87) International publication number: WO 2012/114182

(56) References cited:
- DE-A1- 10 242 369
- JP-A- 2001 309 506
- US-A1- 2004 123 624
- US-A1- 2005 229 629

## Description

### BACKGROUND OF THE INVENTION

### 1. Field of the Invention

The invention relates to a cooling system. More particularly, the invention relates to a cooling system that cools a heat source using a vapor compression refrigeration cycle.

### 2. Description of Related Art

In recent years, hybrid vehicles, fuel cell vehicles, and electric vehicles and the like that run using the driving force of an electric motor have become attractive as a way to address environmental concerns. In these types of vehicles, electrical equipment such as a motor, generator, inverter, converter, and battery generate heat by the sending and receiving electric power. Therefore, this electrical equipment must be cooled.

Thus, technology has been proposed to cool a heat generating body using a vapor compression refrigeration cycle that is used for a vehicle air conditioner. For example, Japanese Patent Application Publication No. 11-23081 (JP-A-11-23081) describes a system that cools heat generating equipment with intermediate pressure refrigerant, and is provided with a cooler configured such that intermediate pressure refrigerant of a refrigeration cycle cools heat generating equipment, and electrical expansion valves, the valve opening amounts of which are able to be controlled by external signals, that are arranged one on each of the upstream side and the downstream side of the cooler. Japanese Patent Application Publication No. 2005-90862 (JP-A-2005-90862) describes a cooling system provided with heat generating body cooling means for cooling the heat generating body, that is provided in a bypass passage that bypasses a compressor, an evaporator, and a pressure reducer of an air conditioning refrigeration cycle.

Japanese Patent Application Publication No. 2007-69733 (JP-A-2007-69733) describes a cooling system that cools a heat generating body using refrigerant for an air conditioning system, and in which a heat exchanger that performs heat exchange with air for air conditioning, and a heat exchanger that performs heat exchange with the heat generating body, are arranged in parallel in a refrigerant passage that leads from an expansion valve to a compressor. Japanese Patent Application Publication No. 2001-309506 (JP-A-2001-309506) describes a cooling system that circulates refrigerant of a vehicle air conditioning refrigeration cycle system to a cooling member of an inverter circuit portion that drive-controls an electric motor for running a vehicle, and suppresses cooling of air conditioning airflow by an evaporator of the vehicle air conditioning refrigeration cycle system when cooling of the air conditioning airflow is unnecessary.

With the cooling systems described in JP-A-11-23081, JP-A-2005-90862, and JP-A-2007-69733, a cooling path for cooling a heat source such as electrical equipment is incorporated into a vapor compression refrigeration cycle, and when cooling the heat source, all of the refrigerant of the refrigeration cycle is introduced into the cooling path for cooling the heat source. As a result, supercooling of the heat source, pressure loss related to the flow of refrigerant, and power consumption of the compressor and the like, increase.

**Furthermore, a cooling system according to the preamble of claim 1 is known from** DE 102 42 369 A1**.**

### SUMMARY OF THE INVENTION

**It is the object of the present invention to provide a cooling system capable of inhibiting** supercooling of a heat source, reducing pressure loss, and reducing power consumption of a compressor.

**According to the present invention, this object is solved with a cooling system having the features of claim 1.**

This cooling system includes a compressor that circulates refrigerant; a condenser that condenses the refrigerant; a first pressure reducer that reduces a pressure of the refrigerant that has been condensed by the condenser; an evaporator that vaporizes the refrigerant that has been reduced in pressure by the first pressure reducer; a first passage through which the refrigerant flows from an outlet of the condenser toward an inlet of the first pressure reducer, and that includes a passage forming portion that forms part of the first passage; a second passage that is connected in parallel with the passage forming portion; a cooling portion that is provided in the second passage and cools the heat source using the refrigerant from the condenser; and a second pressure reducer that is arranged upstream of the cooling portion in the second passage. **Furthermore, the cooling system includes another condenser arranged in the first passage, and the passage forming portion may be provided between the condenser and the other condenser.**

The cooling system according to this aspect may also include a flow control valve that is arranged in the passage forming portion and regulates a flowrate of the refrigerant that flows through the passage forming portion and a flowrate of the refrigerant that flows through the second passage.

In the cooling system described above, the condenser may have a greater heat releasing capability to release heat from the refrigerant than the other condenser does.

The cooling system described above may also include a pressure increasing device that increases a pressure of the refrigerant that flows from the cooling portion toward the other condenser.

The cooling system described above may also include another cooling portion that is provided in a path for the refrigerant that flows from the pressure increasing device toward the other condenser, and that cools another heat source that is different from the heat source, using the refrigerant.

With the cooling system of the invention described above, supercooling of a heat source is able to be inhibited, and pressure loss as well as power consumption of a compressor are able to be reduced.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view showing a frame format of the structure of a cooling system according to a first example embodiment of the invention;
FIG. 2 is a Mollier diagram showing the state of refrigerant of a vapor compression refrigeration cycle according to the first example embodiment;
FIGS. 3A to 3D are views schematically showing opening amount control of a flow control valve according to the first example embodiment;
FIG. 4 is a view showing a frame format of the structure of a cooling system according to a second example embodiment of the invention;
FIG. 5 is a Mollier diagram showing the state of refrigerant of a vapor compression refrigeration cycle according to the second example embodiment;
FIG. 6 is a view showing a frame format of the structure of a cooling system according to a third example embodiment of the invention;
FIG 7 is a Mollier diagram showing the state of refrigerant of a vapor compression refrigeration cycle according to the third example embodiment;
FIG 8 is a view showing a frame format of the structure of a cooling system according to a fourth example embodiment of the invention; and
FIG 9 is a Mollier diagram showing the state of refrigerant of a vapor compression refrigeration cycle according to the fourth example embodiment.

### DETAILED DESCRIPTION OF EMBODIMENTS

Example embodiments of the invention will be described below with reference to the accompanying drawings. In the following description, like or corresponding parts will be denoted by like preference characters, and detailed descriptions of those parts will not be repeated.

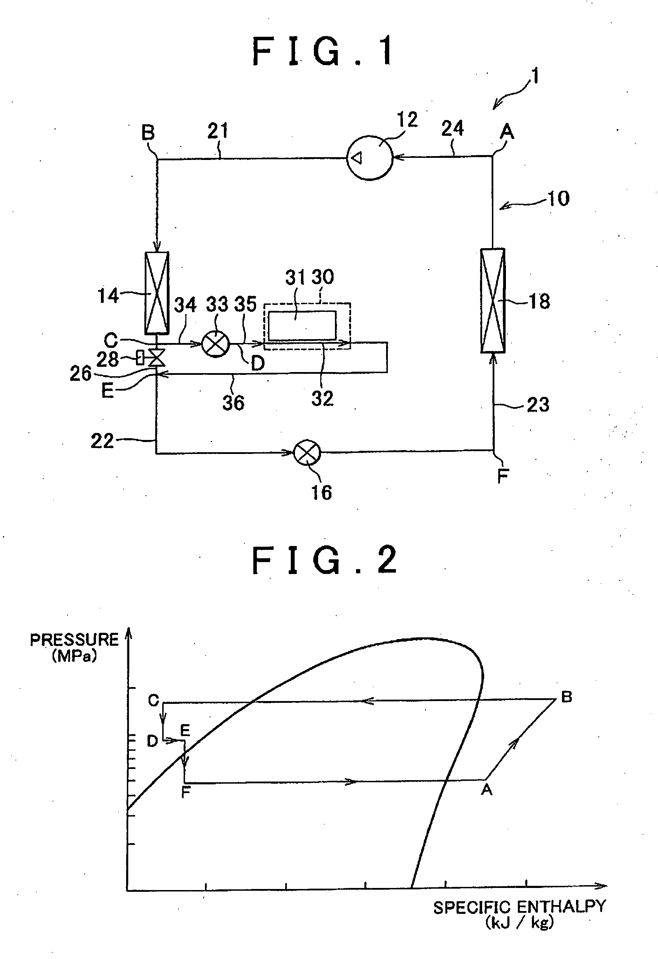

FIG. 1 is a view of a frame format showing the structure of a cooling system 1 according to a first example embodiment of the invention. As shown in FIG. 1, the cooling system 1 includes a vapor compression refrigeration cycle 10. This vapor compression refrigeration cycle 10 is provided in a vehicle in order to cool the interior of the vehicle, for example. Cooling using the vapor compression refrigeration cycle 10 is performed when, for example, a switch for performing cooling is turned on, or when an automatic control mode that automatically adjusts the temperature in the cabin of the vehicle so that it comes to match a set temperature is selected and the temperature in the vehicle cabin is higher than the set temperature.

The vapor compression refrigeration cycle 10 includes a compressor 12, a condenser 14, an expansion valve 16 that serves as an example of a pressure reducer, and an evaporator 18. The vapor compression refrigeration cycle 10 also includes a refrigerant passage 21 that communicates the compressor 12 with the condenser 14, a refrigerant passage 22 that serves as a first passage that communicates the condenser 14 with the expansion valve 16, a refrigerant passage 23 that communicates the expansion valve 16 with the evaporator 18, and a refrigerant passage 24 that communicates the evaporator 18 with the compressor 12. The vapor compression refrigeration cycle 10 is formed by the compressor 12, the condenser 14, the expansion valve 16, and the evaporator 18 being connected together by the refrigerant passages 21 to 24.

The compressor 12 operates with an electric motor or an engine mounted in the vehicle as the power source, and adiabatically compresses refrigerant gas to create superheated refrigerant gas. When operating, the compressor 12 draws in and compresses gas-phase refrigerant that flows through the refrigerant passage 24 from the evaporator 18, and discharges it into the refrigerant passage 21. The compressor 12 circulates the refrigerant in the vapor compression refrigeration cycle 10 by discharging the refrigerant into the refrigerant passage 21.

The condenser 14 isobarically releases heat from the superheated refrigerant gas that has been compressed in the compressor 12 to an external medium, thus creating refrigerant liquid. The gas-phase refrigerant discharged from the compressor 12 is condensed (i.e., liquefied) by being cooled through releasing its heat to the surroundings in the condenser 14. The condenser 14 includes a tube through which refrigerant flows, and fins for performing heat exchange between the refrigerant that flows through the tube and the surrounding air in the condenser 14. The condenser 14 performs heat exchange between the refrigerant and cool air supplied by the natural flow of air produced as the vehicle runs. The temperature of the refrigerant drops from the heat exchange in the condenser 14, and as a result, the refrigerant becomes liquefied.

The expansion valve 16 injects the high-pressure liquid-phase refrigerant that flows through the refrigerant passage 22 from a small hole so that it expands and changes to low-temperature, low-pressure atomized refrigerant. The expansion valve 16 reduces the pressure of the refrigerant liquid that has been condensed by the condenser 14, thereby creating wet vapor of a gas-liquid mixture. Unlike an expansion valve 33 that will be described later, the expansion valve 16 functions as a first pressure reducer for reducing the pressure of the refrigerant liquid that flows through the refrigerant passage 22. The pressure reducers are not limited to being the expansion valves 16 and 33 that throttle and expand. That is, they may be capillaries instead.

The evaporator 18 absorbs the heat in the surrounding air that has been introduced so as to contact the evaporator 18, by the atomized refrigerant that flows through the evaporator 18 being vaporized. The evaporator 18 cools the inside of vehicle cabin by absorbing the vaporization heat when the wet vapor of the refrigerant vaporizes and becomes refrigerant gas from the air in the vehicle cabin that is a portion to be cooled, using the refrigerant that has been reduced in pressure by the expansion valve 16. The inside of the vehicle cabin is cooled by the air, whose temperature has been reduced by the heat being absorbed by the evaporator 18, being returned again into the vehicle cabin. The refrigerant is heated by absorbing heat from the surroundings in the evaporator 18.

The evaporator 18 includes the tube through which refrigerant flows, and the fins for performing heat exchange between the refrigerant that flows through the tube and the surrounding air in the evaporator 18. Refrigerant in a wet vapor state flows through the tube. When the refrigerant flows through the tube, it vaporizes by absorbing the heat of the air inside the vehicle cabin as latent heat of vaporization via the fins, and then becomes superheated vapor by sensible heat. The vaporized refrigerant flows into the compressor 12 through the refrigerant passage 24, and the compressor 12 compresses the refrigerant that flows in from the evaporator 18.

The refrigerant passage 21 is a passage for leading refrigerant from the compressor 12 to the condenser 14. The refrigerant flows from the outlet of the compressor 12 toward the inlet of the condenser 14 via the refrigerant passage 21. The refrigerant passage 22 is a passage for leading refrigerant from the condenser 14 to the expansion valve 16. The refrigerant flows from the outlet of the condenser 14 toward the inlet of the expansion valve 16 via the refrigerant passage 22. The refrigerant passage 23 is a passage for leading refrigerant from the expansion valve 16 to the evaporator 18. The refrigerant flows from the outlet of the expansion valve 16 toward the inlet of the evaporator 18 via the refrigerant passage 23. The refrigerant passage 24 is a passage for leading refrigerant from the evaporator 18 to the compressor 12. The refrigerant flows from the outlet of the evaporator 18 toward the inlet of the compressor 12 via the refrigerant passage 24.

Refrigerant flows through points A, B, C, E, and F, in that order, shown in FIG. 1, inside the vapor compression refrigeration cycle 10, such that refrigerant circulates to the compressor 12, the condenser 14, the expansion valve 16, and the evaporator 18. The refrigerant circulates through the vapor compression refrigeration cycle 10 by passing through a refrigerant circulation flow path in which the compressor 12, the condenser 14, the expansion valve 16, and the evaporator 18 are connected in that order by the refrigerant passages 21 to 24.

Carbon dioxide, a hydrogen oxide such as propane or isobutane, ammonia, or water, for example, may be used as the refrigerant of the vapor compression refrigeration cycle 10.

The refrigerant passage 22 through which refrigerant flows from the condenser 14 toward the expansion valve 16 includes a passage forming portion 26. The passage forming portion 26 forms part of the refrigerant passage 22. Point C shown in FIG. 1 represents an upstream end portion of the passage forming portion 26, i.e., an end portion of the passage forming portion 26 that is on the side near the condenser 14. Point E in FIG. 1 represents a downstream end portion of the passage forming portion 26, i.e., an end portion of the passage forming portion that is on the side near the expansion valve 16.

The cooling system 1 includes a second passage that is connected in parallel with the passage forming portion 26. A cooling portion 30 is provided in this second passage. The cooling portion 30 is provided in a path for the refrigerant that flows from the condenser 14 toward the expansion valve 16. The cooling portion 30 includes an HV equipment heat source 31 that is electrical equipment mounted in the vehicle, and a cooling passage 32 that is a conduit through which refrigerant flows. The HV equipment heat source 31 is one example of a heat source. The second passage described above includes the cooling passage 32. The second passage also includes refrigerant passages 34, 35, and 36 that are conduits through which refrigerant flows. The expansion valve 33 that serves as a second pressure reducer that is different from the first pressure reducer (i.e., the expansion valve 16) is arranged upstream of the cooling portion 30 in the second passage. The expansion valve 33 expands the high-pressure liquid-phase refrigerant discharged from the condenser 14, thereby reducing the temperature and the pressure of the refrigerant, just like the expansion valve 16.

The second passage through which refrigerant flows parallel with the passage forming portion 26 from point C toward point E in FIG 1 is divided into a refrigerant passage 34 that is upstream (i.e., on the side near the condenser 14) of the expansion valve 33, a refrigerant passage 35 that is between the expansion valve 33 and the cooling portion 30, the cooling passage 32 that is included in the cooling portion 30, and the refrigerant passage 36 that is downstream (i.e., on the side near the expansion valve 16) of the cooling portion 30. The refrigerant passages 34 and 35 are passages for leading refrigerant from point C to the cooling portion 30. The refrigerant passage 36 is a passage for leading refrigerant from the cooling portion 30 to point E. Point C is a branch point between the refrigerant passage 22 and the refrigerant passage 34, and point E is a branch point between the refrigerant passage 22 and the refrigerant passage 36.

Refrigerant that is discharged from the condenser 14 and branches off at point C to flow through the second passage flows toward the cooling portion 30 via the refrigerant passage 34, the expansion valve 33, and the refrigerant passage 35. The refrigerant that has flowed to the cooling portion 30 and through the cooling passage 32 removes heat from the HV equipment heat source 31 that is the heat source, thereby cooling the HV equipment heat source 31. The cooling portion 30 cools the HV equipment heat source 31 using the low-temperature, low-pressure refrigerant that has been discharged from the condenser 14 and reduced in pressure by the expansion valve 33. The refrigerant then flows from the cooling portion 30 toward point E via the refrigerant passage 36, and reaches the expansion valve 16 via the refrigerant passage 22. The upstream end portion of the cooling passage 32 is connected to the refrigerant passage 35, and the downstream end portion of the cooling passage 32 is connected to the refrigerant passage 36.

The cooling portion 30 is provided with a structure that enables heat exchange between the refrigerant and the HV equipment heat source 31 at the cooling passage 32. In this example embodiment, the cooling portion 30 has the cooling passage 32 that is formed such that an outer peripheral surface of the cooling passage 32 directly contacts the case of the HV equipment heat source 31. The cooling passage 32 has a portion that is adjacent to the case of the HV equipment heat source 31. Heat exchange between the refrigerant that flows through the cooling passage 32 and the HV equipment heat source 31 is possible at this portion.

The HV equipment heat source 31 is directly connected to the outer peripheral surface of the cooling passage 32 that forms part of the refrigerant path from the condenser 14 to the expansion valve 16 of the vapor compression refrigeration cycle 10, and is thus cooled. The HV equipment heat source 31 is arranged on an outer portion of the cooling passage 32, so the HV equipment heat source 31 will not interfere with the flow of refrigerant that flows through the cooling passage 32. Therefore, pressure loss in the vapor compression refrigeration cycle 10 will not increase, so the HV equipment heat source 31 is able to be cooled without increasing the power of the compressor 12.

Alternatively, the cooling portion 30 may be provided with a suitable well-known heat pipe interposed between the HV equipment heat source 31 and the cooling passage 32. In this case, the HV equipment heat source 31 is connected to an outer peripheral surface of the cooling passage 32 via the heat pipe, and is cooled by heat being transferred from the HV equipment heat source 31 to the cooling passage 32 via the heat pipe. By making the HV equipment heat source 31 the heating portion of the heat pipe, and the cooling passage 32 the cooling portion of the heat pipe, heat-transfer efficiency between the cooling passage 32 and the HV equipment heat source 31 is able to be increased, so cooling efficiency of the HV equipment heat source 31 can be improved. For example, a wick type heat pipe may be used.

The heat pipe enables heat to be reliably transferred from the HV equipment heat source 31 to the cooling passage 32, so there may be distance between the HV equipment heat source 31 and the cooling passage 32, and there is no need for a complex arrangement of the cooling passage 32 in order to connect the cooling passage 32 to the HV equipment heat source 31. As a result, the degree of freedom in the arrangement of the HV equipment heat source 31 is able to be improved.

The HV equipment heat source 31 includes electrical equipment that generates heat as a result of sending and receiving electric power. The electrical equipment includes at least one of, for example, an inverter for converting direct current (DC) electric power into alternating current (AC) electric power, a motor-generator that is a rotary electric machine, a battery that is a power storage device, a converter for stepping up the voltage of the battery, and a DC / DC converter for stepping down the voltage of the battery. The battery is a secondary battery such as a lithium-ion battery or a nickel-metal hydride battery. A capacitor may also be used instead of a battery.

FIG. 2 is a Mollier diagram showing the state of refrigerant of the vapor compression refrigeration cycle 10 according to the first example embodiment. The horizontal axis in FIG 2 represents the specific enthalpy (unit: kJ / kg) of the refrigerant, and the vertical axis in FIG. 2 represents the absolute pressure (unit: MPa) of the refrigerant. The curve in the drawing is a saturated vapor line and a saturated liquid line of the refrigerant. FIG 2 shows the thermodynamic equation of state of the refrigerant at each point (i.e., points A, B, C, D, E, and F in FIG 1) in the vapor compression refrigeration cycle 10, in which refrigerant flows from the refrigerant passage 22 at the outlet of the condenser 14 to the refrigerant passage 34 via point C and is expanded at the expansion valve 33, after which it flows through the refrigerant passage 35, cools the HV equipment heat source 31, and then returns from the refrigerant passage 36 to the refrigerant passage 22 at the inlet of the expansion valve 16 via point E.

As shown in FIG 2, refrigerant in a superheated vapor state that is drawn into the compressor 12 (point A) is adiabatically compressed along a geometric entropy line in the compressor 12. As this refrigerant is compressed, the pressure and temperature of the refrigerant rises, and it becomes high-temperature, high-pressure superheated vapor with a large degree of superheat (point B). The refrigerant then flows to the condenser 14. The high-pressure refrigerant vapor that has entered the condenser 14 is cooled in the condenser 14, and changes from the superheated vapor to dry saturated vapor while remaining at constant pressure, such that the refrigerant vapor then releases latent heat of condensation and is gradually liquidized, becoming wet vapor of a gas-liquid mixture. When all of the refrigerant condenses, it becomes saturated liquid. Moreover, the refrigerant releases sensible heat and becomes supercooled liquid (point C).

The liquefied refrigerant flows into the expansion valve 33 via the refrigerant passage 34. In the expansion valve 33, the supercooled liquid-state refrigerant is throttled and expanded, so the temperature and pressure of the refrigerant decrease without the specific enthalpy of the refrigerant changing (point D). The refrigerant that has been reduced in temperature in the expansion valve 33 flows via the refrigerant passage 35 to the cooling passage 32 of the cooling portion 30, where it cools the HV equipment heat source 31. By performing heat exchange with the HV equipment heat source 31, the degree to which the refrigerant is supercooled lessens, and the temperature of the refrigerant in the supercooled liquid state rises and approaches a saturation temperature of liquid refrigerant (point E).

Then the refrigerant flows into the expansion valve 16. In the expansion valve 16, the refrigerant in the supercooled liquid state is throttled and expanded, so the temperature and pressure decrease without the specific enthalpy changing, thus creating low-temperature, low-pressure wet vapor of a gas-liquid mixture (point F). The heat of the refrigerant in the wet vapor state that is discharged from the expansion valve 16 is absorbed from the outside, so the refrigerant vaporizes while remaining at constant pressure from the latent heat of vaporization in the evaporator 18. When all of the refrigerant becomes dry saturated vapor, the refrigerant vapor further rises in temperature from the sensible heat and becomes superheated vapor (point A), which is then drawn into the compressor 12. The refrigerant continuously changes states repeatedly from compressed, to condensed, to throttled and expanded, to vaporized, according to this kind of cycle.

In the description of the vapor compression refrigeration cycle above, a theoretical refrigeration cycle is described. However, in the actual vapor compression refrigeration cycle 10, it is of course necessary to take into account loss in the compressor 12, pressure loss of the refrigerant, and heat loss.

While the vapor compression refrigeration cycle 10 is operating, refrigerant cools the inside of the vehicle cabin by absorbing, in the evaporator 18, vaporization heat from the air inside the vehicle cabin. In addition, high-pressure liquid refrigerant discharged from the condenser 14 branches off at point C, such that some of the refrigerant flows to the HV equipment heat source 31 and performs heat exchange with the HV equipment heat source 31, thereby cooling the HV equipment heat source 31. The cooling system 1 cools the HV equipment heat source 31 that is the heat source mounted in the vehicle, using the vapor compression refrigeration cycle 10 for air-conditioning the inside of the vehicle cabin.

The HV equipment heat source 31 is cooled using the vapor compression refrigeration cycle 10 provided to cool the portion to be cooled at the evaporator 18. Therefore, there is no need to provide equipment such as a special water circulating pump or cooling fan in order to cool the HV equipment heat source 31. Accordingly, the structure necessary for the cooling system 1 of the HV equipment heat source 31 can be reduced so the structure of the apparatus can be simple, and as a result, the manufacturing cost of the cooling system 1 is able to be reduced. In addition, there is no need to operate a power supply such as a pump or a cooling fan in order to cool the HV equipment heat source 31, so power does not need to be consumed to operate the power supply. Therefore, the power consumption for cooling the HV equipment heat source 31 is able to be reduced.

The HV equipment heat source 31 can be cooled using refrigerant with a temperature that has been lowered by the refrigerant being expanded by the expansion valve 33, so the HV equipment heat source 31 is able to be cooled more efficiently. The temperature of the refrigerant that cools the HV equipment heat source 31 with the cooling portion 30 can be appropriately regulated by optimally selecting the specifications of the expansion valve 33. Therefore, the HV equipment heat source 31 can be cooled by supplying the cooling portion 30 with refrigerant of a lower temperature suitable for cooling the HV equipment heat source 31.

The passage forming portion 26 that is a path that does not pass through the cooling portion 30, and the second passage that is a path for refrigerant that cools the HV equipment heat source 31 via the cooling portion 30, are provided in parallel as paths through which refrigerant flows from the outlet of the condenser 14 toward the inlet of the expansion valve 16. Therefore, only some of the refrigerant that is discharged from the condenser 14 flows to the cooling portion 30. Refrigerant of an amount necessary to cool the HV equipment heat source 31 is made to flow to the cooling portion 30, such that the HV equipment heat source 31 is able to be appropriately cooled. Accordingly, the HV equipment heat source 31 is able to be inhibited from being supercooled. Not all of the refrigerant flows to the cooling portion 30, so pressure loss related to the flow of refrigerant through the cooling portion 30 can be reduced, and in turn, the power consumption necessary to operate the compressor 12 in order to circulate the refrigerant can be reduced.

The refrigerant is cooled in the condenser 14 until it becomes supercooled liquid, and is then heated to a temperature slightly below the saturation temperature by receiving sensible heat from the HV equipment heat source 31. Then the refrigerant passes through the expansion valve 16, and as a result, the refrigerant becomes low-temperature, low-pressure wet vapor. At the outlet of the expansion valve 16, the refrigerant has the temperature and pressure originally required to cool the inside of the vehicle cabin. The heat releasing capability of the condenser 14 is set such that the condenser 14 is able to sufficiently cool the refrigerant.

When the low-temperature, low-pressure refrigerant that has passed through the expansion valve 16 is used to cool the HV equipment heat source 31, the cooling capability of the evaporator 18 with respect to the air inside of the vehicle cabin decreases, so the vehicle cabin cooling capability decreases. Therefore, with the cooling system 1 in this example embodiment, the refrigerant is cooled to a sufficiently supercooled state in the condenser 14, and high-pressure refrigerant from the outlet of the condenser 14 is used to cool the HV equipment heat source 31. Thus, the HV equipment heat source 31 is able to be cooled without adversely affecting the cooling capability to cool the air inside the vehicle cabin. The temperature required to cool the HV equipment heat source 31 is preferably lower than at least an upper limit value of a target temperature range as the temperature range of the HV equipment heat source 31.

The specifications of the condenser 14 (i.e., the size or heat releasing performance of the condenser 14) are set such that the temperature of the liquid-phase refrigerant after passing through the condenser 14 is lower than the temperature required to cool the inside of the vehicle cabin. The specifications of the condenser 14 are set such that the refrigerant has a heat discharge that is greater than the condenser of the vapor compression refrigeration cycle when not cooling the HV equipment heat source 31, by the amount of heat that it is estimated that the refrigerant will receive from the HV equipment heat source 31. The cooling system 1 provided with the condenser 14 having such specifications is able to appropriately cool the HV equipment heat source 31 without increasing the power of the compressor 12, while maintaining cooling performance for the inside of the vehicle cabin.

Returning now to FIG 1, the cooling system 1 includes a flow control valve 28. The flow control valve 28 is provided in the refrigerant passage 22 that leads from the condenser 14 toward the expansion valve 16. The flow control valve 28 is arranged in the passage forming portion 26 that forms part of the refrigerant passage 22. The flow control valve 28 appropriately regulates the flowrate of the refrigerant that flows through the passage forming portion 26 and the flowrate of the refrigerant that flows through the second passage that includes the cooling passage 32, by changing its opening amount (i.e., the opening amount of the flow control valve 28) to increase or decrease pressure loss of the refrigerant that flows through the passage forming portion 26.

For example, if the flow control valve 28 is fully closed such that the valve opening amount is 0%, the entire amount of the refrigerant that is discharged from the condenser 14 will flow from point C into the refrigerant passage 34. If the opening amount of the flow control valve 28 is increased, the flowrate of refrigerant that directly flows to the expansion valve 16 via the passage forming portion 26, of the refrigerant that flows from the condenser 14 to the refrigerant passage 22, will increase, and consequently, the flowrate of the refrigerant that flows via the refrigerant passages 34 and 35 to the cooling passage 32 where it cools the HV equipment heat source 31 will decrease. Conversely, if the opening amount of the flow control valve 28 is decreased, the flowrate of refrigerant that directly flows to the expansion valve 16 via the passage forming portion 26, of the refrigerant that flows from the condenser 14 to the refrigerant passage 22, will decrease, and consequently, the flowrate of the refrigerant that flows through the cooling passage 32 where it cools the HV equipment heat source 31 will increase.

If the opening amount of the flow control valve 28 is increased, the flowrate of the refrigerant that cools the HV equipment heat source 31 will decrease, so the cooling capability for the HV equipment heat source 31 will be reduced. If the opening amount of the flow control valve 28 is decreased, the flowrate of the refrigerant that cools the HV equipment heat source 31 will increase, so the cooling capability for the HV equipment heat source 31 will be improved. In this way, the amount of refrigerant that flows to the HV equipment heat source 31 can be optimally regulated using the flow control valve 28, so supercooling of the HV equipment heat source 31 can be inhibited, and in addition, both pressure loss related to the flow of refrigerant through the second passage, and the power consumption of the compressor 12 for circulating the refrigerant are able to be reduced.

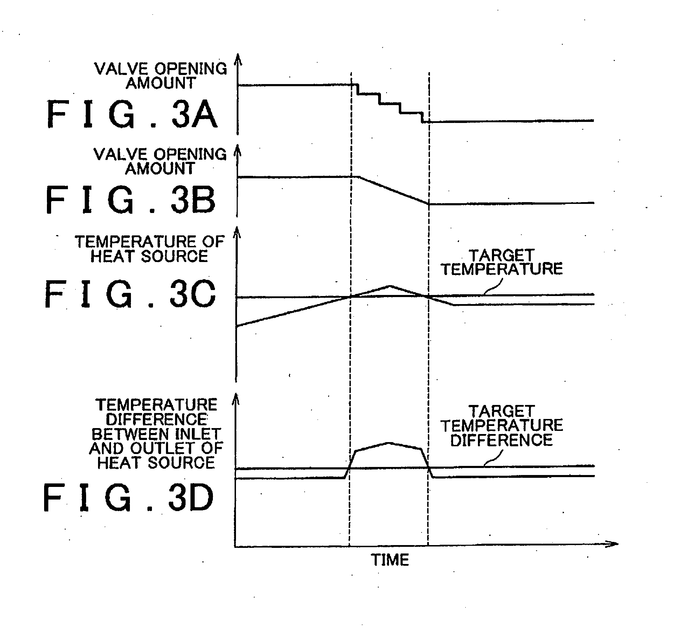

Next, an example of control related to the adjustment of the opening amount of the flow control valve 28 will be described. FIGS. 3A to 3D are views schematically showing opening amount control of the flow control valve 28. The horizontal axis shown in the graphs in FIGS. 3A to 3D represents time. The vertical axis of the graph in FIG. 3A represents the valve opening amount when the flow control valve 28 is an electrical expansion valve with a stepping motor. The vertical axis of the graph in FIG 3B represents the opening amount when the flow control valve 28 is a temperature-type expansion valve that opens and closes according to a change in temperature. The vertical axis of the graph in FIG. 3C represents the temperature of the HV equipment heat source 31. The vertical axis of the graph in FIG. 3D represents a temperature difference between the inlet and the outlet (i.e., an inlet / outlet temperature difference) of the HV equipment heat source 31.

The HV equipment heat source 31 is cooled by refrigerant flowing through the cooling portion 30. The adjustment of the opening amount of the flow control valve 28 is performed by, for example, monitoring the temperature of the HV equipment heat source 31, or the temperature difference between the outlet temperature and the inlet temperature of the HV equipment heat source 31. For example, referring to the graph in FIG. 3C, a temperature sensor that intermittently measures the temperature of the HV equipment heat source 31 is provided, and the temperature of the HV equipment heat source 31 is monitored. Also, for example, referring to the graph in FIG 3D, a temperature sensor that measures the inlet temperature and the outlet temperature of the HV equipment heat source 31 is provided, and the temperature difference between the inlet and outlet of the HV equipment heat source 31 is monitored.

If the temperature of the HV equipment heat source 31 exceeds a target temperature, or if the inlet / outlet temperature difference of the HV equipment heat source 31 exceeds a target temperature difference (such as 3 to 5°C), the opening amount of the flow control valve 28 will decrease, as shown in the graphs in FIGS. 3A and 3B. Throttling the opening amount of the flow control valve 28 increases the flowrate of the refrigerant that flows to the cooling portion 30 through the refrigerant passages 34 and 35, as described above, so the HV equipment heat source 31 can be cooled even more effectively. As a result, the temperature of the HV equipment heat source 31 can be reduced to equal than or less the target temperature, as shown in the graph in FIG. 3C, or the inlet / outlet temperature difference of the HV equipment heat source 31 can be reduced to equal to or less than the target temperature difference, as shown in the graph in FIG 3D.

In this way, by optimally adjusting the opening amount of the flow control valve 28, it is possible to ensure refrigerant of an amount that enables the heat releasing capability required to keep the HV equipment heat source 31 within an appropriate temperature range to be obtained, such that the HV equipment heat source 31 can be appropriately cooled. Therefore, the problem of the HV equipment heat source 31 overheating and becoming damaged is able to be inhibited from occurring.

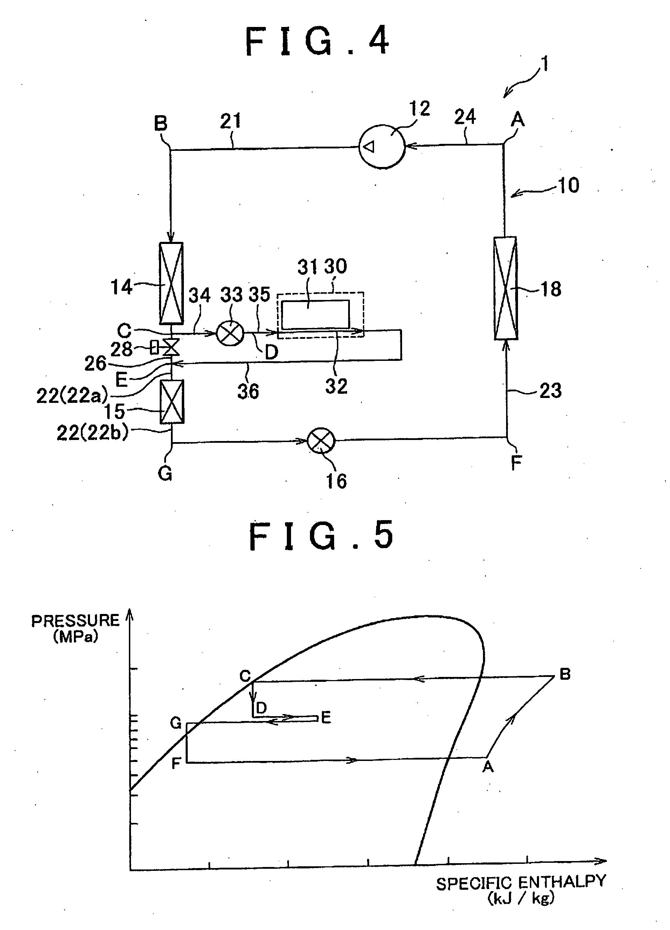

FIG. 4 is a view showing a frame format of the structure of the cooling system 1 according to a second example embodiment of the invention. The cooling system 1 of the second example embodiment differs from that of the first example embodiment in that a condenser 15 that is another condenser that is different from the condenser 14 is arranged in the refrigerant passage 22 that joins the condenser 14 and the expansion valve 16 together.

The cooling system 1 of the second example embodiment includes the condenser 14 that serves as a first condenser, and the condenser 15 that serves as a second condenser. The condenser 15 is provided, so the refrigerant passage 22 branches into two, i.e., into a refrigerant passage 22a that is upstream (i.e., on the side near the condenser 14) of the condenser 15, and a refrigerant passage 22b that is downstream (i.e., on the side near the expansion valve 16) of the condenser 15. In the vapor compression refrigeration cycle 10, high-pressure refrigerant that has been discharged from the compressor 12 is condensed by both the condenser 14 and the condenser 15.

The passage forming portion 26 that forms part of the refrigerant passage 22 is provided in the refrigerant passage 22a between the condenser 14 and the condenser 15. A second passage that is a cooling system of the HV equipment heat source 31 that includes the cooling passage 32 is arranged parallel with the passage forming portion 26. A path for refrigerant that flows from the condenser 14 to the condenser 15, and a path for refrigerant that flows from the condenser 14 to the condenser 15 via the cooling portion 30 are provided in parallel, and pressure loss when refrigerant flows to the cooling system of the HV equipment heat source 31 is able to be reduced by having only some of the refrigerant flow to the cooling portion 30.

FIG. 5 is a Mollier diagram showing the state of refrigerant of the vapor compression refrigeration cycle 10 according to the second example embodiment. The horizontal axis in FIG. 5 represents the specific enthalpy (unit: kJ / kg) of the refrigerant, and the vertical axis in FIG. 5 represents the absolute pressure (unit: MPa) of the refrigerant. The curve in the drawing is a saturated vapor line and a saturated liquid line of the refrigerant. FIG. 5 shows the thermodynamic equation of state of the refrigerant at each point (i.e., points A, B, C, D, E, G, and F) in the vapor compression refrigeration cycle 10, in which refrigerant flows from the refrigerant passage 22a at the outlet of the condenser 14 to the refrigerant passage 34 via point C and is expanded at the expansion valve 33, after which it flows through the refrigerant passage 35, cools the HV equipment heat source 31, and then returns from the refrigerant passage 36 to the refrigerant passage 22a at the inlet of the condenser 15 via point E.

The vapor compression refrigeration cycle 10 in the second example embodiment is the same as that in the first example embodiment except for the system from the condenser 14 to the expansion valve 16. That is, the states of the refrigerant from point G to point B via points F and A in the Mollier diagram in FIG 5 are the same as the states of the refrigerant from point E to point B via points F and A in the Mollier diagram in FIG. 2. Therefore, the particular states of the refrigerant from point B to point G in the vapor compression refrigeration cycle 10 of the second example embodiment will be described below.

High-temperature, high-pressure refrigerant in a superheated vapor state (point B) that has been adiabatically compressed by the compressor 12 is cooled in the condenser 14. This refrigerant releases sensible heat and thus changes from superheated vapor to dry saturated vapor while remaining at constant pressure, such that the refrigerant releases the latent heat of condensation and is gradually liquidized, becoming wet vapor of a gas-liquid mixture. All of the refrigerant condenses and becomes saturated liquid (point C).

The refrigerant in a saturated liquid state that flows out from the condenser 14 flows from point C into the expansion valve 33 via the refrigerant passage 34. In the expansion valve 33, the refrigerant in a supercooled liquid state is throttled and expanded, so the temperature and pressure of the refrigerant decrease without the specific enthalpy of the refrigerant changing, and the refrigerant becomes wet vapor that is a mixture of the saturated liquid and the saturated vapor (point D). The refrigerant that has been reduced in temperature in the expansion valve 33 flows via the refrigerant passage 35 to the cooling passage 32 of the cooling portion 30, where it cools the HV equipment heat source 31. Heat exchange with the HV equipment heat source 31 heats the refrigerant and thus increases the degree of dryness of the refrigerant. The refrigerant receives latent heat from the HV equipment heat source 31 and some of this refrigerant consequently vaporizes, such that the ratio of saturated vapor in the refrigerant that is in the wet vapor state increases (point E).

Then the refrigerant flows into the condenser 15. The wet vapor of the refrigerant is again condensed in the condenser 15, and when all of the refrigerant condenses, it becomes saturated liquid. Moreover, the refrigerant releases sensible heat and becomes supercooled liquid that is supercooled (point G). Then the refrigerant becomes low-temperature, low-pressure wet vapor (point F) by passing through the expansion valve 16.

By sufficiently cooling the refrigerant in the condenser 15, at the outlet of the expansion valve 16, the refrigerant has the temperature and pressure originally required to cool the inside of the vehicle cabin. Therefore, the amount of heat that can be received from the outside when the refrigerant vaporizes in the evaporator 18 can be made sufficiently large. Setting the heat releasing capability of the condenser 15 that is able to sufficiently cool the refrigerant in this way enables the HV equipment heat source 31 to be cooled without adversely affecting the cooling capability to cool the air inside the vehicle cabin. Therefore, both the cooling capability for the HV equipment heat source 31 and the vehicle cabin cooling capability are able to be ensured.

With the vapor compression refrigeration cycle 10 according to the first example embodiment, the condenser 14 is arranged between the compressor 12 and the expansion valve 16, so it is necessary to further cool the refrigerant from a saturated liquid state in the condenser 14 so that the refrigerant has a predetermined degree of supercooling. If the refrigerant in a supercooled liquid state is cooled, the temperature of the refrigerant will approach atmospheric temperature, and the cooling efficiency of the refrigerant will decrease, so the capacity of the condenser 14 must be increased. As a result, the size of the condenser 14 will increase, which is a drawback for the cooling system 1 that is to be mounted in a vehicle. On the other hand, if the condenser 14 is made small in order to mount it in a vehicle, the heat releasing capability of the condenser 14 will also be less, and as a result, the temperature of the refrigerant at the outlet of the expansion valve 16 may not be sufficiently low, so the vehicle cabin cooling capability may be insufficient.

In contrast, with the vapor compression refrigeration cycle 10 according to the second example embodiment, two condensers 14 and 15 are arranged between the compressor 12 and the expansion valve 16, and the cooling system of the HV equipment heat source 31 is provided between the condenser 14 and the condenser 15. With the condenser 14, the refrigerant simply needs to be cooled to a saturated liquid state, as shown in FIG 5. Refrigerant that is in a wet vapor state as a result of having received the latent heat of vaporization from the HV equipment heat source 31 such that some of the refrigerant has vaporized is again cooled by the condenser 15. Until the refrigerant that is in a wet vapor state is condensed and completely turns into saturated liquid, the refrigerant changes states at a constant temperature. The condenser 15 further cools the refrigerant to a degree of supercooling necessary for cooling the inside of the vehicle cabin. Therefore, compared with the first example embodiment, there is no need to increase the degree of supercooling of the refrigerant, so the capacity of the condensers 14 and 15 can be decreased. Accordingly, the vehicle cabin cooling capability can be ensured, and the size of the condensers 14 and 15 can be reduced, so the cooling system 1 that is small and advantageous for being mounted in a vehicle is able to be obtained.

The refrigerant that flows from the condenser 14 to the HV equipment heat source 31 is heated as a result of receiving heat from the HV equipment heat source 31 when it cools the HV equipment heat source 31. When the refrigerant is heated to equal to or greater than a saturated vapor temperature in the HV equipment heat source 31 and all of the refrigerant vaporizes, the amount of heat exchange between the refrigerant and the HV equipment heat source 31 decreases, so the HV equipment heat source 31 is no longer able to be cooled efficiently, and the pressure loss when the refrigerant flows through the conduit increases. Therefore, it is preferable to sufficiently cool the refrigerant in the condenser 14 to the point where not all of the refrigerant will vaporize after cooling the HV equipment heat source 31.

More specifically, the state of the refrigerant at the outlet of the condenser 14 is made to be a state that is close to saturated liquid, typically, a state in which the refrigerant is on the saturated liquid line at the outlet of the condenser 14. When the condenser 14 has the capability to sufficiently cool the refrigerant in this way, the heat releasing capability to release heat from the refrigerant of the condenser 14 consequently becomes higher than the heat releasing capability of the condenser 15. Sufficiently cooling the refrigerant in the condenser 14 that has relatively greater heat releasing capability enables refrigerant that has received heat from the HV equipment heat source 31 to be held in a wet vapor state, so a decrease in the amount of heat exchange between the refrigerant and the HV equipment heat source 31 can be avoided, thus enabling the HV equipment heat source 31 to be sufficiently cooled efficiently. The refrigerant in a wet vapor state after cooling the HV equipment heat source 31 is again efficiently cooled in the condenser 15, and is cooled until it comes to be in a supercooled liquid state below the saturation temperature. Therefore, the cooling system 1 that enables both the vehicle cabin cooling capability and the cooling capability for the HV equipment heat source 31 to be ensured can be provided.

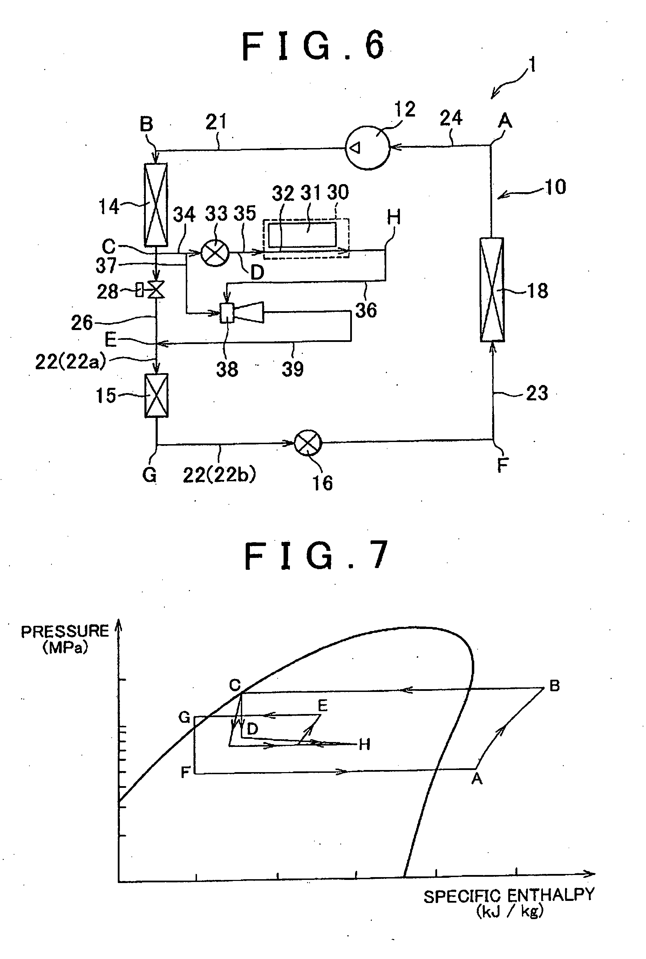

FIG. 6 is a view showing a frame format of the structure of the cooling system 1 according to a third example embodiment of the invention. The cooling system 1 in the third example embodiment differs from that in the second example embodiment in that it includes an ejector 38. The ejector 38 serves as a pressure increasing device that makes the high-pressure refrigerant before passing through the expansion valve 33 into a driven flow and makes the refrigerant after passing through the expansion valve 33 and cooling the HV equipment heat source 31 in the cooling portion 30 into a secondary flow, and mixes the driven flow and the secondary flow to increase the pressure of the low-pressure refrigerant that flows from the cooling portion 30 toward the condenser 15.

More specifically, as shown in FIG. 6, a refrigerant passage 37 that branches off from the refrigerant passage 34 on the inlet side of the expansion valve 33 is connected to the ejector 38. The refrigerant passage 36 that is a flow path of refrigerant that flows through the cooling portion 30 toward the condenser 15 is also connected to the ejector 38. High-pressure refrigerant that has flowed from the refrigerant passage 37 into the ejector 38 is injected as the driven flow from a nozzle. Refrigerant from the refrigerant passage 36 is drawn into the ejector 38 by negative pressure generated inside of the ejector 38 by the injection of the driven flow, and the viscosity of the driven flow. Inside the ejector 38, the refrigerant that has flowed in from the refrigerant passage 37 completely mixes with the refrigerant that has flowed in from the refrigerant passage 36. Then this mixture is passed through a diffuser so that its pressure increases, and after which it is discharged to a refrigerant passage 39. The refrigerant that has been reduced in pressure by passing through the expansion valve 33 is increased in pressure by the ejector 38, and flows to the condenser 15.

FIG. 7 is a Mollier diagram showing the state of refrigerant of the vapor compression refrigeration cycle 10 according to the third example embodiment. The horizontal axis in FIG. 7 represents the specific enthalpy (unit: kJ / kg) of the refrigerant, and the vertical axis in FIG 7 represents the absolute pressure (unit: MPa) of the refrigerant. The curve in the drawing is a saturated vapor line and a saturated liquid line of the refrigerant. FIG 7 shows the thermodynamic equation of state of the refrigerant at each point (i.e., points A, B, C, D, H, E, G, and F) in the vapor compression refrigeration cycle 10, in which refrigerant flows from the refrigerant passage 22a at the outlet of the condenser 14 to the refrigerant passage 34 via point C and is expanded at the expansion valve 33, after which it flows through the refrigerant passage 35, cools the HV equipment heat source 31, is then increased in pressure by the ejector 38, and is returned from the refrigerant passage 39 to the refrigerant passage 22a at the inlet of the condenser 15 via point E.

The vapor compression refrigeration cycle 10 in the third example embodiment is the same as that in the second example embodiment except for the system from the condenser 14 to the expansion valve 16. That is, the states of the refrigerant from point F to point C via points A and B in the Mollier diagram in FIG 7 are the same as the states of the refrigerant from point F to point C via points A and B in the Mollier diagram in FIG 5. Therefore, the particular states of the refrigerant from point C to point F in the vapor compression refrigeration cycle 10 of the third example embodiment will be described below.

The refrigerant in a saturated liquid state that flows out from the condenser 14 flows from point C into the expansion valve 33 via the refrigerant passage 34. In the expansion valve 33, the refrigerant in a supercooled liquid state is throttled and expanded, so the temperature and pressure of the refrigerant decrease without the specific enthalpy of the refrigerant changing, and the refrigerant becomes wet vapor that is a mixture of the saturated liquid and the saturated vapor (point D). The refrigerant that has been reduced in temperature in the expansion valve 33 flows via the refrigerant passage 35 to the cooling passage 32 of the cooling portion 30, where it cools the HV equipment heat source 31. Heat exchange with the HV equipment heat source 31 heats the refrigerant such that the degree of dryness of the refrigerant increases. The refrigerant receives latent heat from the HV equipment heat source 31 and some of this refrigerant consequently vaporizes, such that the ratio of saturated vapor in the refrigerant that is in the wet vapor state increases (point H).

The refrigerant that has been warmed in the cooling portion 30 is increased in pressure by the ejector 38. The high-pressure refrigerant from the outlet of the condenser 14 is supplied from the refrigerant passage 37 to the ejector 38, and low-pressure refrigerant that has been reduced in pressure by passing through the expansion valve 33 is supplied from the refrigerant passage 36 to the ejector 38. As a result, the pressure of the low-pressure refrigerant increases, and the temperature of the low-pressure refrigerant rises. With the high-pressure refrigerant being driven gas and the low-pressure gas being suction gas, the ejector 38 introduces the low-pressure refrigerant into the ejector 38 using the differential pressure between the high-pressure refrigerant and the low-pressure refrigerant, and raises the pressure of the low-pressure refrigerant and discharges the resultant medium-pressure refrigerant that has a higher pressure (point E).

The ejector 38 is used as a pressure increasing device for increasing the pressure of the low-pressure refrigerant, so there is no need to increase the pressure of the refrigerant by driving a compressor that consumes power. Therefore, an increase in power consumption can be avoided. The ejector 38 has a simple structure in which a nozzle is combined with a diffuser, and has no working parts, so an extremely durable and reliable pressure increasing device is able to be provided.

Then the refrigerant flows into the condenser 15. The wet vapor of the refrigerant that has been increased in pressure by passing through the ejector 38 is again condensed in the condenser 15, and when all of the refrigerant condenses, it becomes saturated liquid. Moreover, the refrigerant releases sensible heat and becomes supercooled liquid that is supercooled (point G). Then the refrigerant becomes low-temperature, low-pressure wet vapor (point F) by passing through the expansion valve 16.

In the condenser 15, the refrigerant is cooled by heat exchange between the outside air and the refrigerant by the refrigerant releasing heat to the outside air. If the refrigerant pressure is low at this time, the temperature difference with the outside air will be small and the heat releasing capability of the condenser 15 with respect to the outside air will decrease. Unless the refrigerant is able to be sufficiently cooled by the condenser 15, the amount of heat that the refrigerant is able to receive from the outside air in the evaporator 18 may not be sufficiently large, so the cooling capability to cool the air inside the vehicle cabin may decrease. Therefore, the refrigerant that flows into the condenser 15 is able to be increased in temperature by raising the pressure of the low-pressure refrigerant that has cooled the HV equipment heat source 31 at the cooling portion 30, using the ejector 38. As a result, a decrease in the heat releasing capability of the condenser 15 can be avoided, so the efficiency of the condenser 15 can be improved. Accordingly, refrigerant is able to be sufficiently cooled in the condenser 15, so a decrease in cooling capability can be avoided.

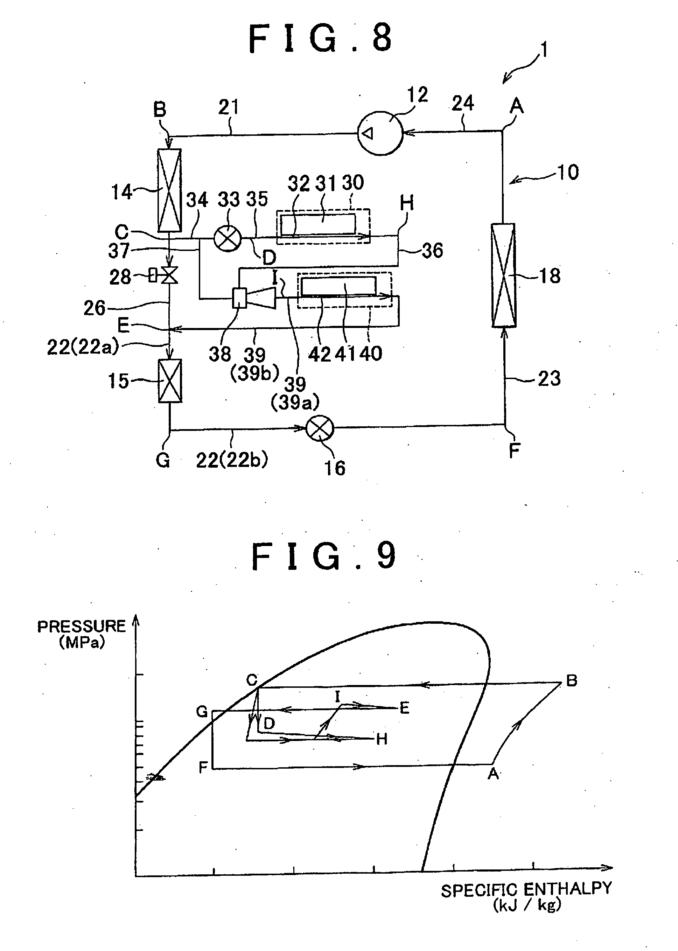

FIG 8 is a view showing a frame format of the structure of the cooling system 1 according to a fourth example embodiment of the invention. The cooling system 1 in the fourth example embodiment differs from that in the third example embodiment in that a cooling portion 40 that is another cooling portion that is different from the cooling portion 30 described above is provided in the refrigerant passage 39 that is a path for refrigerant that has been increased in pressure by the ejector 38. The cooling portion 40 is provided in the path for refrigerant that flows from the ejector 38 toward the condenser 15, between the ejector 38 and the condenser 15.

The cooling portion 40 includes an HV equipment heat source 41 that is that is electrical equipment mounted in the vehicle, and a cooling passage 42 that is a conduit through which refrigerant flows. The HV equipment heat source 41 is one example of another heat source that is different from the HV equipment heat source 31. A passage for refrigerant from the ejector 38 toward point E in FIG. 8 is divided into a refrigerant passage 39a that is upstream (i.e., on the side near the ejector 38) of the cooling portion 40, the cooling passage 42 that is included in the cooling portion 40, and a refrigerant passage 39b that is downstream (i.e., on the side near point E) of the cooling portion 40.

Refrigerant that is discharged from the ejector 38, flows to the cooling portion 40 via the refrigerant passage 39a, and flows through the cooling passage 42 removes heat from the HV equipment heat source 41 that is a heat source, thereby cooling the HV equipment heat source 41. The cooling portion 40 cools the HV equipment heat source 41 using the medium-pressure refrigerant discharged from the ejector 38. Refrigerant also flows from the cooling portion 40 toward point E via the refrigerant passage 39b, and then to the condenser 15 via the refrigerant passage 22a. An upstream end portion of the cooling passage 42 is connected to the refrigerant passage 39a, and a downstream end portion of the cooling passage 42 is connected to the refrigerant passage 39b.

Like the cooling portion 30, the cooling portion 40 is provided with a structure that enables heat exchange between the refrigerant and the HV equipment heat source 41 at the cooling passage 42. An outer peripheral surface of the cooling passage 42 may directly contact a case of the HV equipment heat source 41, or a heat pipe may be interposed between the HV equipment heat source 41 and the outer peripheral surface of the cooling passage 42. The HV equipment heat source 41 is arranged on an outer portion of the cooling passage 42, so the HV equipment heat source 41 will not interfere with the flow of refrigerant that flows through the cooling passage 42. Therefore, pressure loss in the vapor compression refrigeration cycle 10 will not increase, so the HV equipment heat source 41 is able to be cooled without increasing the power of the compressor 12.

FIG 9 is a Mollier diagram showing the state of refrigerant of the vapor compression refrigeration cycle 10 according to the fourth example embodiment. The horizontal axis in FIG. 9 represents the specific enthalpy (unit: kJ / kg) of the refrigerant, and the vertical axis in FIG. 9 represents the absolute pressure (unit: MPa) of the refrigerant. The curve in the drawing is a saturated vapor line and a saturated liquid line of the refrigerant. FIG. 9 shows the thermodynamic equation of state of the refrigerant at each point (i.e., points A, B, C, D, H, I, E, G, and F) in the vapor compression refrigeration cycle 10, in which refrigerant flows from the refrigerant passage 22a at the outlet of the condenser 14 to the refrigerant passage 34 via point C and is expanded at the expansion valve 33, after which it flows through the refrigerant passage 35, cools the HV equipment heat source 31, and then is increased in pressure by the ejector 38, and goes on to cool the HV equipment heat source 41, after which it is returned from the refrigerant passage 39 to the refrigerant passage 22a at the inlet of the condenser 15 via point E.

The vapor compression refrigeration cycle 10 in the fourth example embodiment is the same as that in the third example embodiment except for the system from the ejector 38 to the condenser 15. That is, the states of the refrigerant from point G to point H via points F, A, B, C, and D in the Mollier diagram in FIG 9 are the same as the states of the refrigerant from point G to point H via points F, A, B, C, and D in the Mollier diagram in FIG 7. Therefore, the particular states of the refrigerant from point H to point G in the vapor compression refrigeration cycle 10 of the fourth example embodiment will be described below.

High-pressure refrigerant discharged from the outlet of the condenser 14 is supplied from the refrigerant passage 37, and low-pressure refrigerant (point H) that has been reduced in pressure by passing through the expansion valve 33 is supplied from the refrigerant passage 36. The low-pressure refrigerant is increased in pressure and the resultant medium-pressure refrigerant that has a higher pressure is discharged from the ejector 38 (point I). The refrigerant that has been increased in pressure by the ejector 38 flows via the refrigerant passage 39a to the cooling passage 42 of the cooling portion 40, where it cools the HV equipment heat source 41. Heat exchange with the HV equipment heat source 41 heats the refrigerant such that the degree of dryness of the refrigerant increases. The refrigerant receives latent heat from the HV equipment heat source 41 and some of this refrigerant consequently vaporizes, such that the saturated liquid in the refrigerant that is in the wet vapor state decreases and the saturated vapor increases (point E).

Then the refrigerant flows into the condenser 15. The wet vapor of the refrigerant that has cooled the HV equipment heat source 41 is again condensed in the condenser 15, and when all of the refrigerant condenses, it becomes saturated liquid. Moreover, the refrigerant releases sensible heat and becomes supercooled liquid that is supercooled (point G).

Both the HV equipment heat source 31 and the HV equipment heat source 41 are cooled using the vapor compression refrigeration cycle 10, so special equipment for cooling the HV equipment heat sources 31 and 41 is not necessary. Therefore, the structure required to cool the HV equipment heat sources 31 and 41 can be reduced, which in turn enables the manufacturing cost of the cooling system 1 to be reduced. In addition, there is no need to operate a power supply such as a pump or a cooling fan in order to cool the HV equipment heat sources 31 and 41, so power consumption for cooling the HV equipment heat sources 31 and 41 can be reduced.

The temperature suitable for cooling the HV equipment heat source 41 is higher than the temperature suitable for cooling the HV equipment heat source 31. This kind of HV equipment heat source 41 may also be a transaxle, for example. If a transaxle is cooled too much, the viscosity of ATF (Automatic Transaxle Fluid) inside the transaxle increases, which leads to a decrease in fuel efficiency. Therefore, it is preferable to cool the transaxle by the necessary heat amount in a higher temperature range than the motor-generator and the PCU (Power Control Unit). By using the cooling system 1 of the fourth example embodiment, the HV equipment heat source 31 is cooled by the low-temperature refrigerant that has been expanded by the expansion valve 33, and the HV equipment heat source 41 is cooled by the refrigerant that has been discharged from the ejector 38 and increased in temperature.

By optimally selecting the specifications of the expansion valve 33 and the ejector 38, the temperature of the refrigerant that cools the HV equipment heat source 31 at the cooling portion 30, and the temperature of the refrigerant that cools the HV equipment heat source 41 at the cooling portion 40 can be appropriately regulated. Therefore, the HV equipment heat sources 31 and 41 that have different temperatures suitable for cooling are able to be simultaneously cooled at their respective optimal temperatures.

In the first to the fourth example embodiments, the cooling system 1 that cools electrical equipment mounted in a vehicle, of which the HV equipment heat sources 31 and 41 are given as examples, is described. The electrical equipment is not limited to the electrical equipment described, e.g., an inverter, a motor-generator, a transaxle, and the like. That is, the electrical equipment may be any appropriate electrical equipment as long as it at least generates heat by operating. If a plurality of electrical equipment is to be cooled, the plurality of electrical equipment preferably has a common target temperature range for cooling. The target temperature range for cooling is a temperature range that is suitable as a temperature environment for operating the electrical equipment.

Moreover, the heat source that is cooled by the cooling system 1 of the invention is not limited to electrical equipment mounted in a vehicle, but may be any equipment that generates heat, or any heat-generating portion of equipment.

The example embodiments disclosed herein are in all respects merely examples and should in no way be construed as limiting.

The cooling system of the invention may be applied, with particular advantage, to cooling electrical equipment that uses a vapor compression refrigeration cycle for cooling the inside of a vehicle, in a vehicle such as a hybrid vehicle, a fuel cell vehicle, or an electric vehicle or the like, that is provided with electric equipment such as a motor-generator and an inverter and the like.

## Claims

1. A cooling system that cools a heat source (31), comprising:
a compressor (12) that circulates refrigerant;
a condenser (14) that condenses the refrigerant;
a first pressure reducer (16) that reduces a pressure of the refrigerant that has been condensed by the condenser (14);
an evaporator (18) that vaporizes the refrigerant that has been reduced in pressure by the first pressure reducer (16);
a first passage (22) through which the refrigerant flows from an outlet of the condenser (14) toward an inlet of the first pressure reducer (16), and that includes a passage forming portion (26) that forms part of the first passage;
a second passage that is connected in parallel with the passage forming portion (26);
a cooling portion (30) that is provided in the second passage and cools the heat source (31) using the refrigerant from the condenser (14); and
a second pressure reducer (33) that is arranged upstream of the cooling portion (30) in the second passage, **characterized by**
another condenser (15) arranged in the first passage (22), wherein the passage forming portion (26) is provided between the condenser (14) and the other condenser (15).

2. The cooling system according to claim 1, further comprising a flow control valve (28) that is arranged in the passage forming portion (26) and regulates a flowrate of the refrigerant that flows through the passage forming portion (26) and a flowrate of the refrigerant that flows through the second passage.

3. The cooling system according to claim 1, wherein the condenser (14) has a greater heat releasing capability to release heat from the refrigerant than the other condenser (15) does.

4. The cooling system according to claim 1, further comprising a pressure increasing device (38) that increases a pressure of the refrigerant that flows from the cooling portion (30) toward the other condenser (15).

5. The cooling system according to claim 4, further comprising another cooling portion (40) that is provided in a path for the refrigerant that flows from the pressure increasing device (38) toward the other condenser (15), and that cools another heat source (41) that is different from the heat source (31), using the refrigerant.

## Patentansprüche

1. Kühlsystem, das eine Wärmequelle (31) kühlt, mit:
einem Kompressor (12), der das Kühlmittel zirkuliert;
einem Kondensator (14), der das Kühlmittel kondensiert;
einem ersten Druckminderer (16), der einen Druck des durch den Kondensator (14) kondensierten Kühlmittels mindert;
einem Verdampfer (18), der das Kühlmittel verdampft, dessen Druck durch den ersten Druckminderer (16) gemindert wurde;
einem ersten Durchlass (22), durch den das Kühlmittel von einem Auslass des Kondensators (14) in Richtung eines Einlasses des ersten Druckminderers (16) strömt, und das einen Durchlass bildenden Abschnitt (26) aufweist, der einen Teil des ersten Durchlasses bildet;
einem zweiten Durchlass, der parallel zu dem ersten Durchlass bildenden Abschnitt (26) verbunden ist;
einem Kühlabschnitt (30), der in dem zweiten Durchlass vorgesehen ist und die Wärmequelle (31) unter Verwendung des Kühlmittels von dem Kondensator (14) kühlt; und
einem zweiten Druckminderer (33), der stromaufwärts des Kühlabschnitts (30) in dem zweiten Durchlass angeordnet ist, **gekennzeichnet durch**
einen anderen Kondensator (15), der in dem ersten Durchlass (22) angeordnet ist, wobei der Durchlass bildende Abschnitt (26) zwischen dem Kondensator (14) und dem anderen Kondensator (15) vorgesehen ist.

2. Kühlsystem gemäß Anspruch 1, ferner mit einem Strömungssteuerventil (28), das in dem Durchlass bildenden Abschnitt (26) angeordnet ist und einen Durchfluss des Kühlmittels, das durch den Durchlass bildenden Abschnitt (26) strömt, und einen Durchfluss des Kühlmittels, das durch den zweiten Durchlass strömt, regelt.

3. Kühlsystem gemäß Anspruch 1, wobei der Kondensator (14) eine größere Wärmeabgabefähigkeit zum Abgeben von Wärme von dem Kühlmittel als der andere Kondensator (15) hat.

4. Kühlsystem gemäß Anspruch 1, ferner mit einer Druckerhöhungsvorrichtung (38), die einen Druck des Kühlmittels erhöht, der von dem Kühlabschnitt (30) in Richtung des anderen Kondensators (15) strömt.

5. Kühlsystem gemäß Anspruch 4, ferner mit einem anderen Kühlabschnitt (40), der in einem Weg für das Kühlmittel vorgesehen ist, das von der Druckerhöhungsvorrichtung (38) zu dem anderen Kondensator (15) strömt, und der eine andere Wärmequelle (41), die sich von der Wärmequelle (31) unterscheidet, unter Verwendung des Kühlmittels kühlt.

## Revendications

1. Système de refroidissement qui refroidit une source de chaleur (31), comprenant :
un compresseur (12) qui fait circuler un fluide frigorigène ;
un condenseur (14) qui condense le fluide frigorigène ;
un premier détendeur (16) qui réduit une pression du fluide frigorigène qui a été condensé par le condenseur (14) ;
un évaporateur (18) qui vaporise le fluide frigorigène dont la pression a été réduite par le premier détendeur (16) ;
un premier passage (22) à travers lequel le fluide frigorigène s'écoule à partir d'une sortie du condenseur (14) vers une entrée du premier détendeur (16), et qui comporte une partie de formation de passage (26) qui fait partie du premier passage ;
un deuxième passage qui est relié en parallèle à la partie de formation de passage (26) ;
une partie de refroidissement (30) qui est prévue dans le deuxième passage et qui refroidit la source de chaleur (31) en utilisant le fluide frigorigène provenant du condenseur (14) ; et
un deuxième détendeur (33) qui est agencé en amont de la partie de refroidissement (30) dans le deuxième passage, **caractérisé par**
un autre condenseur (15) agencé dans le premier passage (22), dans lequel la partie de formation de passage (26) est prévue entre le condenseur (14) et l'autre condenseur (15).

2. Système de refroidissement selon la revendication 1, comprenant en outre une soupape de réglage de débit (28) qui est agencée dans la partie de formation de passage (26) et qui régule un débit du fluide frigorigène qui s'écoule à travers la partie de formation de passage (26) et un débit du fluide frigorigène qui s'écoule à travers le deuxième passage.

3. Système de refroidissement selon la revendication 1, dans lequel le condenseur (14) a une capacité de dégagement de chaleur permettant de dégager de la chaleur du fluide frigorigène plus grande que celle de l'autre condenseur (15).

4. Système de refroidissement selon la revendication 1, comprenant en outre un dispositif d'augmentation de pression (38) qui augmente une pression du fluide frigorigène qui s'écoule à partir de la partie de refroidissement (30) vers l'autre condenseur (15).

5. Système de refroidissement selon la revendication 4, comprenant en outre une autre partie de refroidissement (40) qui est prévue dans un trajet pour le fluide frigorigène qui s'écoule à partir du dispositif d'augmentation de pression (38) vers l'autre condenseur (15), et qui refroidit une autre source de chaleur (41) qui est différente de la source de chaleur (31), en utilisant le fluide frigorigène.
